# EUROPEAN PATENT SPECIFICATION

(11) **EP 3 883 033 B1**
(45) Date of publication and mention of the grant of the patent: **13.03.2024**
(21) Application number: 19903839.9
(22) Date of filing: 22.02.2019
(51) Int. Cl.: H01M 10/04

(54) **SECONDARY BATTERY AND BATTERY MODULE**
SEKUNDÄRBATTERIE UND BATTERIEMODUL
BATTERIE SECONDAIRE ET MODULE DE BATTERIE

(30) Priority: 29.12.2018 CN 201822269878 U
(43) Date of publication of application: 22.09.2021
(73) Proprietor: Contemporary Amperex Technology Co., Limited, Ningde, Fujian 352100 (CN)
(72) Inventor: HU, Fei, Ningde, Fujian 352100 (CN); SHI, Dongyang, Ningde, Fujian 352100 (CN); JIN, Haizu, Ningde, Fujian 352100 (CN); LI, Zhenhua, Ningde, Fujian 352100 (CN); CHEN, Ning, Ningde, Fujian 352100 (CN); CHEN, Yuanbao, Ningde, Fujian 352100 (CN); YANG, Rui, Ningde, Fujian 352100 (CN)
(74) Representative: Boult Wade Tennant LLP
(86) International application number: PCT/CN2019/075826
(87) International publication number: WO 2020/133661

(56) References cited:
- WO-A1-2017/204137
- WO-A1-2017/208534
- CN-A- 105 609 882
- KR-A- 20080 112 653
- KR-A- 20170 050 875
- US-A1- 2006 035 152
- US-A1- 2008 206 628
- US-A1- 2012 121 967
- US-A1- 2015 221 925

## Description

### TECHINICAL FIELD

The present disclosure relates to the field of battery technologies, and particularly relates to a secondary battery and a battery module.

### BACKGROUND

A battery module generally includes secondary batteries arranged sequentially, and each secondary battery is provided with an electrode assembly inside. In a charge process or a discharge process, the electrode assembly will expand in an arrangement direction of the secondary batteries; expanding forces generated by the electrode assemblies of the secondary batteries will be accumulated in the arrange direction and form an excessive composite force; the composite force presses the secondary batteries, which leads to the secondary batteries being unable to work normally and influences the life of the secondary batteries.

KR 2008 0112653 A discloses a case for a secondary battery, which is formed with a receiving part corresponding to the shape of an electrode assembly and is equipped with polymer sheets containing an HF absorber to be interposed between the exterior surface of the electrode assembly and inner surface of the case.

WO 2017/208534 A1 discloses a secondary battery, wherein an electrode assembly and an electrolyte (not shown) are contained in an outer case, the electrode assembly comprising a positive electrode, a negative electrode, and a separator that is arranged between the positive electrode and the negative electrode. The outer case is conductive, and has a positive polarity or a negative polarity.

US 2006/035152 A1 discloses an electrochemical device having an electrode plate assembly. The electrode plate assembly includes at least one first electrode, at least one second electrode, and a separator interposed between the first electrode and the second electrode.

US 2012/121967 A1 describes a non-aqueous electrolyte battery includes a battery device in which a positive electrode is faced to negative electrode through a separator; a non-aqueous electrolyte; a laminate film which is formed by laminating a metal layer, an outside resin layer formed in outer face of the metal layer, and an inside resin layer formed in the metal layer, and in which the battery device and the non-aqueous electrolyte is packaged by heat welding and housed; a positive electrode lead which is electrically connected to the positive electrode, and drawn from portion heat-welded of the laminate film to an exterior thereof; a negative electrode lead which is electrically connected to the negative electrode, and drawn from portion heat-welded of the laminate film to an exterior thereof; and a porous polymer layer containing, as a component, vinylidene fluoride formed between the laminate film and the battery device.

US 2015/221925 A1 disclose a stacked type secondary battery, which includes: an electrode assembly including multiple first electrode plates and multiple second electrode plates having the opposite polarity to that of the first electrode plates and stacked alternately with the first electrode plates with separators respectively interposed therebetween; an outer can in which an inner space for accommodating the electrode assembly is formed; an outer cap which is combined with the outer can so as to cover an open side of the outer can; and a conducting polymer film which is positioned between an outermost second electrode plate among the multiple second electrode plates and the outer cap to electrically connect the second electrode plate and the outer cap, or positioned between the outermost second electrode plate and the outer can to electrically connect the second electrode plate and the outer can.

WO 2017/204137 A1 describes an electricity storage element, which is provided with a plurality of electrode bodies around each of which an electrode is wound, an electrolytic solution, a case which accommodates the plurality of electrode bodies and the electrolytic solution, and an external terminal projecting from an outer surface of the case, wherein the plurality of electrode bodies are arranged in the direction in which the external terminal projects, with the central winding axes of the electrode bodies parallel to one another, and adjacent electrode bodies are in liquid contact with one another at the outer peripheral surfaces thereof.

CN 105 609 882 A describes an energy storage device with multiple cores stacked inside.

US 2008/206628 A1 describes a lithium secondary battery, which includes electrodes-wound bodies each constructed such that a lithium storable/releasable positive electrode and a lithium storable/releasable negative electrode are wound together with an electrolyte and a separator being interposed between these electrodes.

KR 2017 0050875 A describes a secondary battery, which includes: an electrode assembly; a support plate placed to face the electrode assembly while interposing the electrode assembly; an elastic member connecting an end part of the support plate; and a case accommodating a support band, the support plate and the electrode assembly.

### SUMMARY

In view of the problems in the related art, a purposes of the present disclosure is to provide a secondary battery and a battery module that can ensure performance and life of the second battery.

In order to achieve the above mentioned purpose, the present disclosure provides a secondary battery in accordance with claim 1, and a battery module in accordance with claim 8.

The secondary battery includes an electrode assembly, a case and a cap assembly. The case includes an accommodating cavity, the accommodating cavity includes an opening, and the electrode assembly is accommodated in the accommodating cavity. The electrode assembly includes a plurality of electrode units, and the plurality of electrode units are stacked in an axial direction of the accommodating cavity. The cap assembly includes a cap plate and an insulating member provided at an inner side of the cap plate, the cap plate is connected with the case, and the insulating member is positioned at a side of the electrode assembly in the axial direction. The insulating member is provided with a first surface at a side close to the electrode assembly, and the first surface is a flat surface.

The electrode unit includes a first electrode plate, a second electrode plate and a separator winded together, and includes wide surfaces and narrow surfaces. The first surface is disposed to face the wide surfaces in the axial direction, every two adjacent electrode units contact each other via their respective wide surfaces, and the narrow surfaces are connected with the wide surfaces and positioned at two ends of the electrode unit in a width direction.

The cap assembly further includes electrode terminals and current collecting members, the electrode terminals are provided to the cap plate, and the current collecting members connect the electrode terminals and the electrode assembly. The insulating member is provided with a first groove at a side close to the electrode assembly; the current collecting member includes a first portion accommodated in the first groove. The first portion is provided with a second surface at a side close to the electrode assembly, and the second surface is flush with the first surface.

A dimension of the first surface in the width direction is preferably larger than a dimension of the wide surface in the width direction.

The insulating member is optionally made from plastic, and a Young's modulus of the insulating member ranges from 0.5Gpa to 1.2Gpa.

A first buffer gap may be provided between the insulating member and the electrode assembly, and is in that case used to buffer expansive deformation of the electrode assembly. Preferably, a height of the first buffer gap in the axial direction ranges from 0.5mm to 12mm.

A second buffer gap is preferably provided between the cap plate and the insulating member, and the cap plate and the insulating member are preferably fixedly connected via connecting members.

A flatness of the first surface is optionally not larger than 0.6mm.

A battery module includes a plurality of the secondary batteries, which are arranged sequentially and an arrangement direction of which is perpendicular to the axial direction.

The beneficial effects of the present disclosure are as follows: in the present application, a plurality of electrode units in the secondary battery are arranged along the axial direction, so accumulation of expansions of the plurality of electrode units will be in the axial direction. In a battery module, an arrangement direction of a plurality of the secondary batteries is perpendicular to the axial direction. Therefore, even if expansions of all the electrode assemblies in the arrangement direction are accumulated, a resultant force will not be excessive, thereby preventing the secondary batteries from being broken and ensuring performance and life of the secondary batteries. When the electrode units expand, expansion of the plurality of electrode units will be accumulated in the axial direction, thereby leading to the electrode unit of the electrode assembly contacting the first surface of the insulating member, and even pressing the first surface. In the present disclosure, the first surface is a flat surface, so the electrode units will be evenly deformed, thereby preventing fracturing of the electrode plates, and thus safety performance can be improved.

### BRIEF DESCRIPTION OF THE DRAWINGS

FIG. 1 is an exploded view of a secondary battery according to the present disclosure.
FIG. 2 is a cross sectional view of the secondary battery according to the present disclosure.
FIG. 3 is a cross sectional view of an electrode unit of FIG. 1.
FIG. 4 is a schematic view of a cap assembly of FIG. 1.
FIG. 5 is a schematic view of an insulating member of FIG. 4.
FIG. 6 is another schematic view of the insulating member of FIG. 4.

Reference numerals in figures are represented as follows:

| | | | |
|---|---|---|---|
| 1 | electrode assembly | 34 | current collecting member |
| 11 | electrode unit | 341 | first portion |
| 111 | first electrode plate | 342 | second surface |
| 112 | second electrode plate | 343 | second portion |
| 113 | separator | 344 | third portion |
| 2 | case | 35 | connecting member |
| 21 | accommodating cavity | S1 | wide surface |
| 3 | cap assembly | S2 | narrow surface |
| 31 | cap plate | G1 | first buffer gap |
| 32 | insulating member | G2 | second buffer gap |
| 321 | first surface | X | length direction |
| 322 | first groove | Y | width direction |
| 323 | second groove | Z | axial direction |
| 33 | electrode terminal | | |

### DETAILED DESCRIPTION

To make objects, technical solutions and advantages of the present disclosure more clear, the present disclosure will be further described hereinafter in detail in combination with the accompanying figures and the embodiments. It should be understood that the specific embodiments described herein are merely used to explain the present disclosure but are not intended to limit the present disclosure.

In the description of the present disclosure, unless otherwise specifically defined and limited, the terms "first", "second" and "third" are only used for illustrative purposes and are not to be construed as expressing or implying a relative importance. The term "plurality" indicate two or more. Unless otherwise defined or described, the term "connect" or "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

In the description of the present disclosure, it should be understood that spatially relative terms, such as "above", "below" and the like, are described based on orientations illustrated in the figures, but are not intended to limit the embodiments of the present disclosure.

In the present disclosure, a battery module generally includes secondary batteries, end plates, side plates and busbars. The secondary batteries are provided as plurality in number and are arranged sequentially. The secondary battery of the present disclosure may be a prismatic lithium-ion battery. An arrangement direction of the secondary batteries is parallel to a width direction Y of each secondary battery. The end plates are provide as two in number and the two end plates are respectively provided at two ends of the secondary batteries in the arrange direction, and the side plates are provided as two in number and the two side plates are respectively provided at two sides of the secondary batteries. The end plates and the side plates are welded together to form a rectangular frame. The plurality of secondary batteries are fixed to the frame. The busbars connect the secondary batteries together in series, in parallel or in series-parallel.

Hereinafter a secondary battery of the present disclosure will be described in detail.

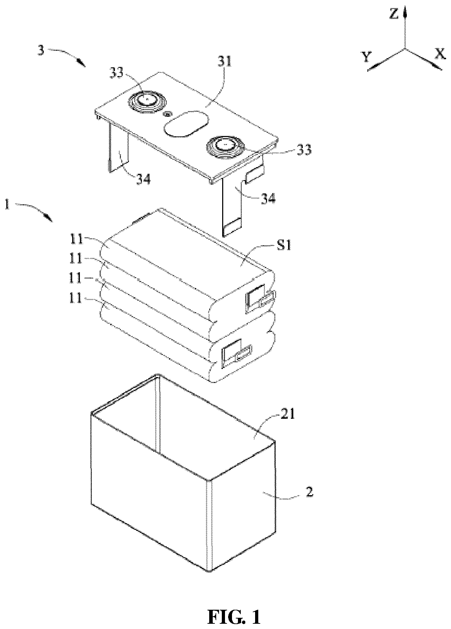

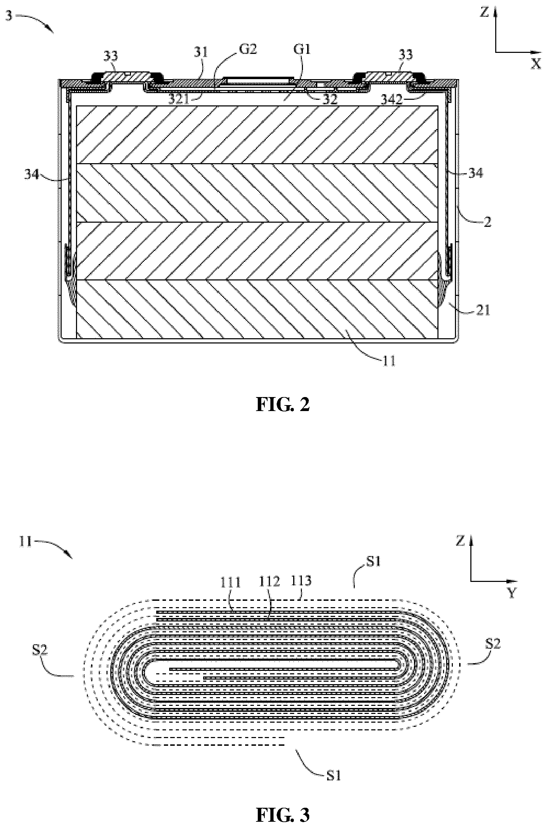

Referring to FIG. 1 and FIG. 2, the secondary battery in the present application includes an electrode assembly 1, a case 2 and a cap assembly 3.

An accommodating cavity 21 is formed in the case 2 to receive the electrode assembly 1 and an electrolyte. An opening is formed at an end of the case 2 in an axial direction Z, and the electrode assembly 1 can be placed into the case 2 via the opening. The case 2 is made of a conductive metal material, such as aluminum, aluminum alloy or the like. The axial direction Z is parallel to an extending direction of the accommodating cavity 21, and when used in a vehicle, the cap assembly 3 of the secondary battery is substantially parallel to the ground, and the axial direction Z is parallel to a height direction of the secondary battery, perpendicular to the width direction Y of the secondary battery, a length direction X of the secondary battery and the arrange direction of the secondary batteries.

The electrode assembly 1 includes a plurality of electrode units 11, and the plurality of electrode units 11 are stacked in the axial direction Z of the accommodating cavity 21. Referring to FIG. 3, each electrode unit 11 includes a first electrode plate 111, a second electrode plate 112 and a separator 113, and the separator 113 separates the first electrode plate 111 and the second electrode plate 112. The electrode unit 11 is formed by spirally winding the first electrode plate 111, the second electrode plate 112 and the separator 113, and the electrode unit 11 may be pressed to a flat structure. Alternatively, each electrode unit 11 may be formed by stacking the first electrode plate 111, the second electrode plate 112 and the separator 113.

The first electrode plate 111 includes an aluminum foil and a positive active material coated on a surface of the aluminum foil, and the positive active material may include lithium manganese oxide or lithium iron phosphate. The second electrode plate 112 includes a copper foil and a negative active material coated on a surface of the copper foil, and the negative active material may include graphite or silicon.

The cap assembly 3 includes a cap plate 31, an insulating member 32, electrode terminals 33 and current collecting members 34. The cap plate 31 is connected with the case 2 and covers the opening of the case 2, thereby sealing the electrode assembly 1 inside the accommodating cavity 21 of the case 2. The insulating member 32 is provided at an inner side of the cap plate 31, that is, the insulating member 32 is provided at a side of the cap plate 31 close to the electrode assembly 1. The electrode terminals 33 are provided to the cap plate 31 and protrude to outside of the cap plate 31. Both of the electrode terminals 33 and the current collecting members 34 are provided as two in number, one current collecting member 34 connects the first electrode plate 111 and one electrode terminal 33, and the other current collecting member 34 connects the second electrode plate 112 and the other electrode terminal 33.

The insulating member 32 is positioned at a side of the electrode assembly 1 in the axial direction Z, that is, the insulating member 32 is positioned at an end of the electrode units 11 in a stack direction of the electrode units 11. The insulating member 32 is provided with a first surface 321 at a side close to the electrode assembly 1, and the first surface 321 is a flat surface. In the present disclosure, the first surface 321 is substantially perpendicular to the axial direction Z.

In a charge process or a discharge process, each electrode unit 11 will expand. In the present disclosure, the plurality of electrode units 11 of the secondary battery are stacked in the axial direction Z, so expansions of the electrode units 11 will be accumulated in the axial direction Z. In the width direction Y, expansions of the electrode units 11 is smaller, so the overall expansion amount of the electrode assembly 1 in the width direction Y is smaller, and correspondingly, an expanding force applied to the case 2 by the electrode assembly 1 is smaller too.

In a battery module, an arrangement direction of the secondary batteries is perpendicular to the axial direction Z, so even though the expansions of all the electrode assemblies 1 are accumulated in the arrange direction, a resultant composite force will not be excessive, thereby preventing the secondary batteries being broken, and ensuring performance and life of the secondary batteries.

In addition, in current technologies, the two end plates of the battery module are used to clamp the secondary batteries; in the case where the resultant force generated by expansions of the secondary batteries is excessive, it may lead to a welding position between the end plate and the side plate fracturing and result in failure of the battery module. In contrast, in the present disclosure, the resultant force generated by the secondary batteries when expanding is small, thereby avoiding failure of the battery module.

In the secondary battery, when the electrode units 11 expand, the expansions of the plurality of electrode units 11 will be accumulated in the axial direction Z, thereby leading to the electrode unit 11 of the electrode assembly 1 closest to the insulating member 32 contacting the first surface 321 of the insulating member 32, and even pressing the first surface 321. If the first surface 321 is uneven, a force applied to the electrode unit 11 by the first surface 321 is uneven too, thereby leading to serious local deformation of the electrode unit 11, and resulting in fracturing of the electrode plates of the electrode unit 11 and causing safety risk. In contrast, in the present disclosure, the first surface 321 is a flat surface, so when the electrode units 11 expand, it can avoid uneven deformation of the electrode unit 11, thereby preventing fracturing of the electrode plates, and thus safety performance can be improved.

Referring to FIG. 3, the electrode unit 11 is a flat structure formed by winding, and a periphery of the electrode unit 11 are formed with wide surfaces S1 and narrow surfaces S2. The wide surfaces S1 are provided as two in number and the two wide surfaces S1 are respectively positioned at two ends of the electrode unit 11 in the axial direction Z, and the narrow surfaces S2 are provided as two in number and the two narrow surfaces S2 are respectively positioned at two ends of the electrode unit 11 in the width direction Y Each narrow surface S2 is in the shape of arc and connects the two wide surfaces S1.

The wide surface S1 of electrode unit 11 at uppermost is disposed to face the first surface 321 in the axial direction Z. Before the electrode unit 11 expands, the wide surface S1 is approximately parallel to the first surface 321. The wide surface S1 has a larger area, so when the electrode unit 11 expands, the wide surface S1 and the first surface 321 facing each other are easier to contact evenly.

In the secondary battery, the plurality of electrode units 11 are directly stacked in the axial direction Z. Every two adjacent electrode units 11 contact each other via their respective wide surfaces S1.

A dimension of the first surface 321 in the width direction Y is larger than a dimension of the wide surface S1 in the width direction Y In this way, the first surface 321 can completely cover the wide surface S1 in the width direction Y, which ensures the even deformation of wide surface S1. Preferably, in the width direction Y, a midline of the first surface 321 is aligned with a midline of the wide surface S1 up and down.

The insulating member 32 is made from an insulating material, such as plastic. When the electrode assembly 1 presses the insulating member 32, the insulating member 32 made from plastic can absorb the expanding force via deformation, thereby decreasing a reaction force applied to the electrode assembly 1 and avoiding the electrode plate being fractured.

If a Young's modulus of the insulating member 32 is too high, the deformation ability of the insulating member 32 would be poor, and thus the insulating member 32 could not accommodate the expanding force effectively. Therefore, preferably, the Young's modulus of the insulating member 32 may ranges from 0.5Gpa to1.2Gpa.

A first buffer gap G1 is provided between the insulating member 32 and the electrode assembly 1. When the electrode assembly 1 expands, the first buffer gap G1 can reserve a certain expanding space for the electrode assembly 1; in other words, the first buffer gap G1 can accommodate the expansion of the electrode assembly 1, thereby decreasing the expanding force applied to the insulating member 32 by the electrode assembly 1 and providing buffering.

Preferably, a height of the first buffer gap G1 in the axial direction Z may ranges from 0.5mm to 12mm. If the height of the first buffer gap G1 in the axial direction Z is too small, for example less than 0.5mm, the buffering effect of the first buffer gap G1 is limited, and the insulating member 32 may still be subjected to a larger expanding force. If the height of the first buffer gap G1 in the axial direction Z is too large, for example larger than 12mm, it may lead to an excessive waste of the space and reduce an energy density of the secondary battery.

A second buffer gap G2 is provided between the cap plate 31 and the insulating member 32. When the electrode assembly 1 presses the insulating member 32, the insulating member 32 can release the expanding force via deformation. By providing the second buffer gap G2, it can avoid that the cap plate 31 would limit the deformation of the insulating member 32, thereby providing buffering. Further, by providing the second buffer gap G2, it can decrease the expanding force transferred to the cap plate 31, thereby avoiding deformation of the cap plate 31.

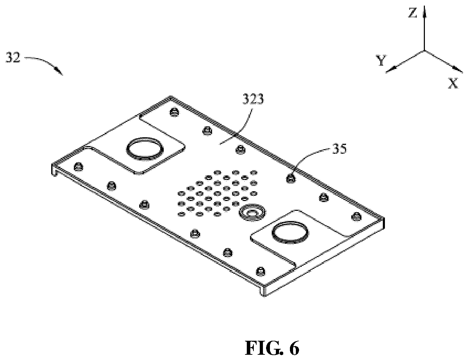

Referring to FIG. 6, in the present disclosure, the second buffer gap G2 may be formed by providing a second groove 323 in the insulating member 32.

The cap plate 31 is fixedly connected with the insulating member 32 via connecting members 35. The connecting members 35 and the insulating member 32 may be formed integrally. The connecting members 35 are fixed to the cap plate 31 by thermal melting. If a flatness of the first surface 321 is too large, the electrode unit 11 would deforms unevenly when the first surface 321 contacts the electrode unit 11, resulting in fracturing of the electrode plates. Therefore, the flatness of the first surface 321 should not be larger than 0.6mm, preferably not larger than 0.3mm.

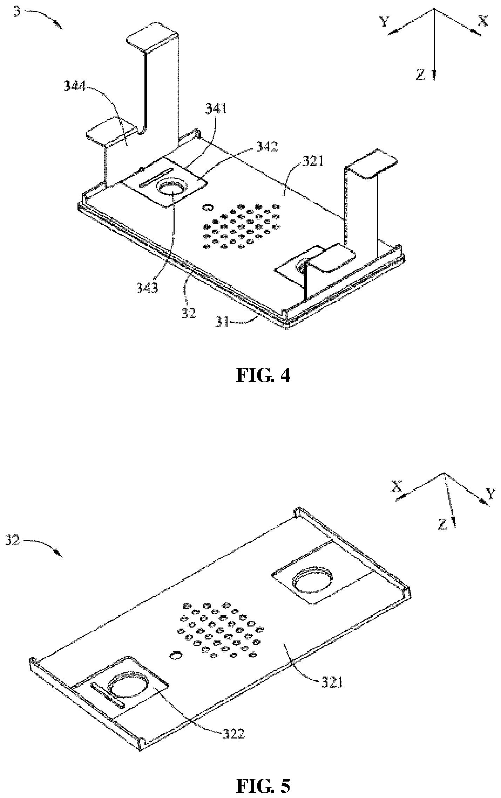

Referring to FIG. 4 and FIG. 5, the insulating member 32 is provided with first grooves 322 at a side close to the electrode assembly 1, a through-hole is provided on a bottom wall of the first groove 322. The current collecting member 34 includes a first portion 341, a second portion 343 and a third portion 344. The first portion 341 is accommodated in the first groove 322. The second portion 343 is connected with the first portion 341 and extends into the through-hole of the insulating member 32, and the second portion 343 is fixed with the electrode terminal 33. The third portion 344 bends downwardly from an end of the first portion 341 in the length direction X and is connected with the electrode assembly 1. In the present disclosure, by providing the first groove 322, it can decrease a space occupied by the current collecting member 34 in the axial direction Z.

The first portion 341 is provided with a second surface 342 at a side close to the electrode assembly 1. When the electrode assembly 1 expands, the electrode assembly 1 may press the second surface 342; if the first surface 321 is misaligned with the second surface 342, the electrode assembly 1 would deform unevenly at a boundary between the first surface 321 and the second surface 342, which leads to fracturing of the electrode plates. Therefore, in the present disclosure, it is preferable that the second surface 342 is flush with the first surface 321.

## Claims

1. A secondary battery, comprising: an electrode assembly (1), a case (2) and a cap assembly (3), wherein
the case (2) comprises an accommodating cavity (21), the accommodating cavity (21) comprises an opening, and the electrode assembly (1) is accommodated in the accommodating cavity (21);
the electrode assembly (1) comprises a plurality of electrode units (11), and the electrode units (11) are stacked in an axial direction (Z) of the accommodating cavity (21);
the cap assembly (3) comprises a cap plate (31) and an insulating member (32) provided at an inner side of the cap plate (31), the cap plate (31) is connected with the case (2), and the insulating member (32) is positioned at a side of the electrode assembly (1) in the axial direction (Z); and
the insulating member (32) is provided with a first surface (321) at a side close to the electrode assembly (1), and the first surface (321) is a flat surface,
wherein the electrode unit (11) comprises a first electrode plate (111), a second electrode plate (112) and a separator (113) winded together, and comprises wide surfaces (S1) and narrow surfaces (S2);
the first surface (321) is disposed to face the wide surfaces (S1) in the axial direction (Z), every two adjacent electrode units (11) contact each other via respective wide surfaces (S1), and the narrow surfaces (S2) are connected with the wide surfaces (S1) and positioned at two ends of the electrode unit in a width direction (Y),
wherein the cap assembly (3) further comprises electrode terminals (33) and current collecting members (34), the electrode terminals (33) are provided to the cap plate (31), and the current collecting members (34) connect the electrode terminals (33) and the electrode assembly (1);
the insulating member (32) is provided with a first groove (322) at a side close to the electrode assembly (1),
the current collecting member (34) comprises a first portion (341) accommodated in the first groove (332); and
the first portion (341) is provided with a second surface at a side close to the electrode assembly (1), and the second surface (342) is flush with the first surface (321).

2. The secondary battery according to claim 1, wherein a dimension of the first surface (321) in the width direction (Y) is larger than a dimension of the wide surface (S1) in the width direction (Y).

3. The secondary battery according to any one of claims 1 to 2, wherein the insulating member (32) is made from plastic, and a Young's modulus of the insulating member (32) ranges from 0.5Gpa to 1.2Gpa.

4. The secondary battery according to any one of claims 1 to 3, wherein a first buffer gap (G1) is provided between the insulating member (32) and the electrode assembly (1), and is used to buffer expansive deformation of the electrode assembly (1).

5. The secondary battery according to claim 4, wherein a height of the first buffer gap (G1) in the axial direction (Z) ranges from 0.5mm to 12mm.

6. The secondary battery according to any one of claims 1 to 5, wherein a second buffer gap (G2) is provided between the cap plate (31) and the insulating member (32), and the cap plate (31) and the insulating member (32) are fixedly connected via connecting members (35).

7. The secondary battery according to any one of claims 1 to 6, wherein a flatness of the first surface (321) is not larger than 0.6mm.

8. A battery module, comprising a plurality of the secondary batteries according to any one of claims 1 to 7, wherein the plurality of secondary batteries are arranged sequentially, and an arrangement direction of the plurality of secondary batteries is perpendicular to the axial direction (Z).

## Patentansprüche

1. Sekundärbatterie, umfassend: eine Elektrodenanordnung (1), ein Gehäuse (2) und eine Kappenanordnung (3), wobei
das Gehäuse (2) einen Aufnahmehohlraum (21) umfasst, der Aufnahmehohlraum (21) eine Öffnung umfasst und die Elektrodenanordnung (1) in dem Aufnahmehohlraum (21) angeordnet ist;
die Elektrodenanordnung (1) mehrere Elektrodeneinheiten (11) umfasst, und die Elektrodeneinheiten (11) in einer axialen Richtung (Z) des Aufnahmehohlraums (21) gestapelt sind;
die Kappenanordnung (3) eine Kappenplatte (31) und ein Isolierelement (32) umfasst, das an einer Innenseite der Kappenplatte (31) vorgesehen ist, wobei die Kappenplatte (31) mit dem Gehäuse (2) verbunden ist, und das Isolierelement (32) an einer Seite der Elektrodenanordnung (1) in der axialen Richtung (Z) angeordnet ist; und
das Isolierelement (32) mit einer ersten Oberfläche (321) an einer Seite nahe der Elektrodenanordnung (1) versehen ist, und die erste Oberfläche (321) eine flache Oberfläche ist,
wobei die Elektrodeneinheit (11) eine erste Elektrodenplatte (111), eine zweite Elektrodenplatte (112) und einen Separator (113) umfasst, die zusammengewickelt sind, und breite Oberflächen (S1) und schmale Oberflächen (S2) umfasst;
die erste Oberfläche (321) so angeordnet ist, dass sie den breiten Oberflächen (S 1) in der axialen Richtung (Z) zugewandt ist, wobei jeweils zwei benachbarte Elektrodeneinheiten (11) einander über entsprechende breite Oberflächen (S 1) berühren, und die schmalen Oberflächen (S2) mit den breiten Oberflächen (S1) verbunden und an zwei Enden der Elektrodeneinheit in einer Breitenrichtung (Y) angeordnet sind,
wobei die Kappenanordnung (3) ferner Elektrodenanschlüsse (33) und Stromsammelglieder (34) umfasst, die Elektrodenanschlüsse (33) an der Kappenplatte (31) vorgesehen sind und die Stromsammelglieder (34) die Elektrodenanschlüsse (33) und die Elektrodenanordnung (1) verbinden;
das Isolierelement (32) mit einer ersten Nut (322) an einer Seite nahe der Elektrodenanordnung (1) versehen ist,
das Stromsammelglieder (34) einen ersten Abschnitt (341) umfasst, der in der ersten Nut (332) angeordnet ist; und
der erste Abschnitt (341) mit einer zweiten Oberfläche an einer Seite nahe der Elektrodenanordnung (1) versehen ist, und die zweite Oberfläche (342) mit der ersten Oberfläche (321) bündig ist.

2. Sekundärbatterie nach Anspruch 1, wobei eine Abmessung der ersten Oberfläche (321) in der Breitenrichtung (Y) größer als eine Abmessung der breiten Oberfläche (S 1) in der Breitenrichtung (Y) ist.

3. Sekundärbatterie nach einem der Ansprüche 1 bis 2, wobei das Isolierelement (32) aus Kunststoff hergestellt ist und ein Elastizitätsmodul des Isolierelements (32) im Bereich von 0,5 GPa bis 1,2 GPa liegt.

4. Sekundärbatterie nach einem der Ansprüche 1 bis 3, wobei zwischen dem Isolierelement (32) und der Elektrodenanordnung (1) ein erster Pufferspalt (G1) vorgesehen ist, der dazu dient, eine expansive Verformung der Elektrodenanordnung (1) zu puffern.

5. Sekundärbatterie nach Anspruch 4, wobei eine Höhe des ersten Pufferspalts (G1) in der axialen Richtung (Z) im Bereich von 0,5 mm bis 12 mm liegt.

6. Sekundärbatterie nach einem der Ansprüche 1 bis 5, wobei ein zweiter Pufferspalt (G2) zwischen der Kappenplatte (31) und dem Isolierelement (32) vorgesehen ist und die Kappenplatte (31) und das Isolierelement (32) über Verbindungselemente (35) fest verbunden sind.

7. Sekundärbatterie nach einem der Ansprüche 1 bis 6, wobei eine Ebenheit der ersten Oberfläche (321) nicht größer als 0,6 mm ist.

8. Batteriemodul mit mehreren Sekundärbatterien nach einem der Ansprüche 1 bis 7, wobei die mehreren Sekundärbatterien aufeinanderfolgend angeordnet sind und eine Anordnungsrichtung der mehreren Sekundärbatterien senkrecht zur axialen Richtung (Z) ist.

## Revendications

1. Batterie secondaire, comprenant : un composant d'électrode (1), un boîtier (2) et un composant de couvercle (3), dans laquelle,
le boîtier (2) comprend une cavité de logement (21), la cavité de logement (21) comprend une ouverture, et le composant d'électrode (1) est logé dans la cavité de logement (21) ;
le composant d'électrode (1) comprend une pluralité d'unités d'électrode (11), et les unités d'électrode (11) sont superposées dans un sens axial (Z) de la cavité de logement (21) ;
le composant de couvercle (3) comprend une plaque de couvercle (31) et un élément isolant (32) prévu sur un côté intérieur de la plaque de couvercle (31), la plaque de couvercle (31) est reliée au boîtier (2), et l'élément isolant (32) est positionné sur un côté du composant d'électrode (1) dans le sens axial (Z) ; et
l'élément isolant (32) est pourvu d'une première surface (321) sur un côté proche du composant électrode (1), et la première surface (321) est une surface plane,
dans laquelle l'unité d'électrode (11) comprend une première plaque d'électrode (111), une deuxième plaque d'électrode (112) et un séparateur (113) enroulés ensemble, et comprend des surfaces larges (S1) et des surfaces étroites (S2) ;
la première surface (321) est disposée pour faire face aux surfaces larges (S1) dans le sens axial (Z), toutes les deux unités d'électrodes adjacentes (11) entrent en contact l'une avec l'autre via des surfaces larges respectives (S1), et les surfaces étroites (S2) sont reliées aux surfaces larges (S1) et positionnées aux deux extrémités de l'unité d'électrode dans le sens de la largeur (Y),
dans lequel composant de couvercle (3) comprend en outre des bornes d'électrode (33) et des collecteurs de courant (34), les bornes d'électrode (33) sont prévues à la plaque de couvercle (31) et les collecteurs de courant (34) relient les bornes d'électrode (33) et composant d'électrode (1) ;
l'élément isolant (32) est pourvu d'une première rainure (322) sur un côté proche du composant électrode (1),
le collecteur de courant (34) comprend une première partie (341) logée dans le premier rainure (332) ; et
la première partie (341) est pourvue d'une deuxième surface sur un côté proche du composant d'électrode (1), et la deuxième surface (342) affleure la première surface (321).

2. Batterie secondaire selon la revendication 1, dans laquelle une dimension de la première surface (321) dans le sens de la largeur (Y) est supérieure à une dimension de la surface large (S1) dans le sens de la largeur (Y).

3. Batterie secondaire selon l'une quelconque des revendications 1 à 2, dans laquelle l'élément isolant (32) est réalisé en matériau plastique et le module de Young de l'élément isolant (32) est comprise entre 0,5 Gpa et 1,2 Gpa.

4. Batterie secondaire selon l'une quelconque des revendications 1 à 3, dans laquelle un premier espace tampon (G1) est prévu entre l'élément isolant (32) et le composant d'électrode (1), et est utilisé pour amortir une déformation expansive du composant d'électrode (1).

5. Batterie secondaire selon la revendication 4, dans laquelle une hauteur du premier espace tampon (G1) dans le sens axial (Z) est comprise entre 0,5 mm et 12 mm.

6. Batterie secondaire selon l'une quelconque des revendications 1 à 5, dans laquelle un deuxième espace tampon (G2) est prévu entre la plaque de couvercle (31) et l'élément isolant (32), et la plaque de couvercle (31) et l'élément isolant (32) sont reliés de manière fixe par l'intermédiaire des éléments de liaison (35).

7. Batterie secondaire selon l'une quelconque des revendications 1 à 6, dans laquelle la planéité de la première surface (321) n'est pas supérieure à 0,6 mm.

8. Module de batterie, comprenant une pluralité de batteries secondaires selon l'une quelconque des revendications 1 à 7, dans lequel la pluralité de batteries secondaires sont successivement disposées, et un sens de disposition de la pluralité de batteries secondaires est perpendiculaire au sens axial (Z).
